# FASCICULE DE BREVET EUROPEEN

(11) **EP 2 341 266 B1**
(45) Date de publication et mention de la délivrance du brevet: **14.03.2012**
(21) Numéro de dépôt: 10194228.2
(22) Date de dépôt: 08.12.2010
(51) Int. Cl.: F16H 55/36, F16H 55/38

(54) **Poulie d'entraînement d'un accessoire d'un véhicule automobile, notamment d'un alterno-démarreur**
Antriebsscheibe eines Zubehörteils eines Kraftfahrzeugs, insbesondere eines Wechselanlassers
Drive pulley of an automobile accessory, particularly of an alternator-starter

(30) Priorité: 18.12.2009 FR 0959171
(43) Date de publication de la demande: 06.07.2011
(73) Titulaire: Valeo Equipements Electriques Moteur, 94046 Créteil Cedex (FR)
(72) Inventeur: Podevin, François, 62170, SEMPY (FR); Leborgne, Christophe, 62310, FRUGES (FR)
(74) Mandataire: de Lambilly Delorme, Marie Pierre

(56) Documents cités:
- WO-A1-2007/074204
- DE-A1- 3 124 320
- FR-A1- 2 192 056

## Description

### Domaine de l'invention

L'invention concerne une poulie d'entraînement destinée à appartenir à une transmission à au moins une courroie entre le moteur d'entraînement et un accessoire, notamment un alterno-démarreur ou un démarreur, d'un véhicule automobile, comme révélé dans DE3124320A et correspondant au préambule de la revendication 1.

### Etat de la technique

Ainsi qu'on le sait un véhicule automobile comporte un moteur thermique et/ou un moteur électrique doté d'une poulie reliée, via au moins une courroie, à une poulie appartenant à un accessoire.

La poulie du moteur du véhicule, appelée par la suite poulie du vilebrequin, et la poulie de l'accessoire appartiennent à une transmission de mouvement à au moins une courroie sans fin représentée schématiquement dans les documents DE 296 09 311 et EP 1 293 665. Ces poulies sont des poulies d'entraînement de l'accessoire. La courroie entraîne par frottement ces poulies.

L'accessoire peut être du type mené et /ou menant.

Il peut s'agir notamment d'un démarreur à courroie, par exemple décrit dans le document EP 1 293 665, d'un alternateur ou d'un alterno-démarreur, décrit par exemple dans les documents WO 01/69762 et US 5 418 400 ou d'un ralentisseur électromagnétique, décrit par exemple dans le document DE 296 09 311. Pour plus de précisions on se reportera aux documents précités, une même courroie pouvant entraîner un ou plusieurs accessoires, par exemple un alterno-démarreur et un compresseur d'une installation de climatisation du véhicule, avec intervention d'au moins un galet tendeur.

L'accessoire comporte par exemple un rotor solidaire d'un arbre de rotor et un stator.

La poulie de l'accessoire est dans un mode de réalisation solidaire du rotor, comme décrit dans le document DE 296 09 311.

Dans un autre mode de réalisation la poulie de l'accessoire est solidaire d'un arbre de sortie distinct de l'arbre de rotor, comme décrit dans le document EP 1 293 665.

Dans encore un autre mode de réalisation la poulie de l'accessoire est solidaire de l'arbre de sortie confondu avec l'arbre de rotor, comme dans l'alterno-démarreur décrit dans le document WO 01/69762.

Les poulies de l'accessoire et du vilebrequin comportent, de manière connue, circonférentiellement plusieurs gorges à section en forme de V, pour réception d'une courroie sans fin, dite courroie poly-V.

Cette courroie poly-V comporte plusieurs dents, avantageusement de section trapézoïdale, dans le sens de sa longueur. Ces dents sont reçues chacune dans une gorge circonférentielle complémentaire des poulies du vilebrequin et de l'accessoire. Une seule courroie est nécessaire pour transmettre toute la puissance car on obtient une adhérence optimale sur toute la surface des la poulies.

Ces courroies poly-V sont plus souples que les courroies trapézoïdales et permettent une utilisation sur des poulies de faible diamètre, ainsi que des rapports de transmission élevés et une répartition homogène de la pression entre la courroie et la poulie.

Dans les documents précités la poulie de l'accessoire est fixée sur l'extrémité filetée de son arbre à l'aide d'un écrou en contact avec la poulie.

En variante la poulie de l'accessoire est vissée sur son arbre comme décrit dans le document FR 2 898 654. Dans ce document l'accessoire est un alterno-démarreur, c'est-à-dire un alternateur réversible Ainsi qu'on le sait un alternateur ou un alterno-démarreur comporte un carter comprenant au moins deux flasques ajourés de forme annulaire et creuse. Ces flasques sont appelés palier avant et palier arrière. Le carter porte intérieurement un stator entourant un rotor solidaire d'un arbre.

Le stator comprend un corps de stator polyphasé portant un bobinage doté d'au moins un enroulement par phase.

Un entrefer existe entre la périphérie interne du corps du stator et la périphérie externe du rotor, tel qu'un rotor à griffes ou à pôles saillants. L'arbre du rotor est monté à rotation par l'intermédiaire de roulements à billes portés centralement respectivement par le palier avant et le palier arrière.

Dans la forme de réalisation de la figure 1, qui correspond à une reproduction partielle de la figure 1 du document FR 2 898 654 auquel on se reportera, la bague interne 50 du roulement avant 5 est intercalée entre une entretoise 23 et un rebord saillant 22 en forme de douille appartenant à une poulie 8 de la transmission de mouvement par courroie poly-V. Cette bague 50 est montée sur un tronçon lisse 18 de l'arbre 1 solidaire du rotor 2, ici à griffes. Le tronçon 18 est prolongé à l'avant par une extrémité filetée 13.

L'entretoise 23 est elle-même intercalée entre la face avant du rotor 2 portant un ventilateur avant 3 et la bague interne 50 du roulement 5. La poulie comporte un trou central 16, 17, qui comporte à l'arrière un tronçon lisse 16 monté sur le tronçon lisse 18 de l'arbre 1. Ce tronçon 16 est prolongé par un filetage interne 17 destiné à se visser, à l'aide d'un outil externe , sur l'extrémité filetée 13 de l'arbre 1 comme visible dans les figures 2 à 6 de ce document FR 2 898 654. Le trou 16, 17 débouche à l'avant dans une cavité 19 dotée d'un fond 21. Cette cavité présente à sa périphérie externe au moins deux entailles destinées à la réception de protubérances complémentaires formées en saillie à la périphérie externe de l'outil externe. L'extrémité filetée 13 présente une empreinte 56 pour réception de l'extrémité libre d'un outil interne traversant l'outil externe (voir figure 5 de ce document FR 2898 654).

A l'aide de l'outil interne on bloque l'arbre 1, tandis qu'avec l'outil externe on visse la poulie sur l'arbre. Cette poulie 8 est tantôt une poulie menée lorsque l'alterno-démarreur fonctionne en mode générateur, c'est-à-dire comme un alternateur classique, tantôt menante lorsque l'alternateur fonctionne en mode moteur électrique notamment pour démarrer le moteur thermique du véhicule comme décrit dans les documents WO 01/01/69762 et US 5 418 400.

La poulie peut ainsi se desserrer. Pour éviter se desserrage on effectue en final un soudage 9 entre l'extrémité avant chanfreinée de la poulie et l'extrémité avant filetée 13 de l'arbre.

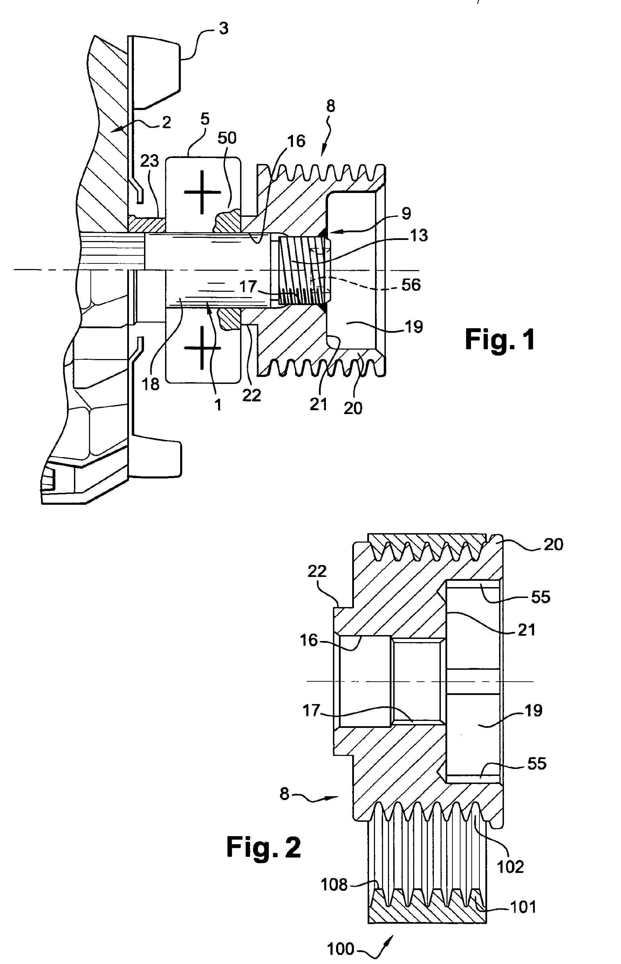

Cette poulie présente à sa périphérie externe 20 des gorges circonférentielles de réception de la courroie poly-V. Il en est de même de la poulie du vilebrequin. Ces gorges sont de section en forme de V à fond arrondi. La figure 2 montre la coopération de la courroie 100, du type poly-V, avec la périphérie externe 20 d'une poulie 8 du type de celle de la figure 1.

Dans cette figure 2 les éléments identiques à ceux du document FR A 2 898 654 seront affectés des mêmes signes de référence. Ainsi on voit qu'il existe un jeu entre le fond arrondi des gorges 102, à section en forme de V, ménagées à la périphérie externe 20 de la poulie 8 et les extrémités libres 108 en vis à vis des dents 101 de forme trapézoïdale de la courroie 100.

Les gorges 102 sont des gorges évasées.

Dans ce mode de réalisation la poulie 8 comporte six gorges 102 et la courroie six dents au lieu de sept gorges dans la figure 1. Le nombre de gorges et de dents dépend bien entendu des applications. Dans cette figure 2 on voit également en 55 les entailles, ici au nombre de quatre, ménagées à la périphérie externe de la cavité 19 pour réception des saillies de l'outil externe.

On notera que la poulie 8 présente à l'avant un épaulement au niveau de sa périphérie externe 20.

Un problème se pose. En effet, notamment par temps de pluie, le véhicule automobile peut être amené à traverser des mares d'eau voir même des gués.

La courroie est ainsi mouillée et de l'eau s'accumule entre le fond des gorges et les extrémités libres des dents de la courroie poly-V. Il en est de même par temps de neige ou en hiver suite à des projections d'eau salée ou de tout autre liquide et/ou autre corps étranger, tel que de la poussière ou du sable, notamment mélangé à de l'eau.

L'eau accumulée est mise sous pression en sorte qu'un film d'eau peut s'intercaler entre les flancs en vis-à-vis des gorges de la poulie et des dents de la courroie ce qui provoque une perte d'adhérence de la courroie et une perte de transmission de couple, sachant que l'alterno-démarreur délivre un couple plus important lorsqu'il fonctionne en mode moteur électrique notamment pour démarrer le véhicule ou entraîner un équipement auxiliaire. La courroie peut patiner et le véhicule peut ainsi ne pas démarrer.

De telles pertes d'adhérence et de transmission de couple sont gênantes car le véhicule doit pouvoir redémarrer en toute circonstance pour des raisons de sécurité, notamment pour ne pas rester bloqué dans un passage à niveau.

S'agissant d'un ralentisseur électromagnétique, il faut que le ralentisseur fonctionne de manière fiable pour pouvoir ralentir le véhicule automobile dans une descente afin de ménager les freins du véhicule automobile.

S'agissant d'un démarreur à courroie il faut également que le véhicule puisse redémarrer en toute circonstance.

Dans le document DE 31 24 320, conforme au préambule de la revendication 1, on a recherché à diminuer les bruits dus en fonctionnement à la présence d'air entre la courroie et la poulie. Pour ce faire on prévoit dans la poulie des canaux de passage d'air de faible dimension. Cette solution n'est pas bien adaptée aux problèmes de perte d'adhérence et de transmission de couple précités.

### Objet de l'invention

La présente invention a pour but de proposer une solution non bruyante, qui permette au moins de limiter ces pertes d'adhérence de la courroie pour un fonctionnement fiable en toutes circonstances de l'accessoire.

Pour atteindre ce but, selon l'invention l'une au moins des poulies d'entraînement, dans laquelle certaines au moins des ses gorges évasées et à flancs inclinés sont prolongées intérieurement par une rainure est caractérisée en ce que deux lignes en vis-à-vis des flancs d'une gorge se coupent dans la rainure au voisinage du sommet du fond de cette rainure.

Grâce à l'invention on limite les pertes d'adhérence tout en ayant en fonctionnement normal une réduction des bruits dus notamment à la présence d'air dans les rainures et ce sans affecter outre mesure la résistance mécanique de la poulie.

Cette solution permet de conserver le maximum de matière entre deux rainures successives, tout en ayant des rainures profondes présentant le volume nécessaire pour évacuer l'eau et/ou tout autre impureté.

Suivant d'autres caractéristiques, procurant d'autres avantages, prises isolément ou en combinaison :
- toutes les gorges sont prolongées intérieurement par une rainure ;
- la rainure comporte deux flancs parallèles ;
- la rainure comporte deux flancs inclinés ;
- les flancs de la rainure sont raccordés intérieurement l'un à l'autre par un fond semi cylindrique ;
- les flancs de la rainure sont raccordés intérieurement l'un à l'autre par un fond plat;
- les flancs de la rainure se raccordent chacun au flanc concerné de la gorge associée par l'intermédiaire d'un rayonnage ;
- les flancs sont séparés l'un de l'autre par une distance inférieure à la largeur de l'extrémité libre d'une dent de la courroie ;
- la distance entre deux flancs est globalement égale à 1, 2 mm ;
- les rainures appartiennent à la poulie de l'accessoire ;
- les rainures appartiennent à la poulie du vilebrequin ;
- les rainures n'affectent pas les zones utiles de frottement des gorges ;
- au moins une rainure a une taille différente des autres rainures.

Grâce à l'invention l'eau accumulée est évacuée à la faveur des rainures supplémentaires, qui permettent de diminuer la pression de l'eau sur la courroie. La ou les poulies d'entraînement sont ainsi des poulies drainantes en sorte que l'on augmente en toute circonstance l'adhérence entre les dents de la courroie et les flancs des gorges de la poulie. On améliore également la capacité d'évacuation de l'eau et le plaquage des dents de la courroie sur les flancs des gorges de la poulie. La courroie ne glisse plus. Les phénomènes d'aquaplaning de la courroie sont au moins diminués. Le véhicule peut ainsi redémarrer et l'accessoire fonctionner en toutes circonstances.

On réduit également les bruits en fonctionnement normale, tout en n'affectant pas outre mesure la résistance mécanique de la poulie.

L'invention sera mieux comprise, et d'autres buts, caractéristiques, détails et avantages de celle-ci apparaîtront plus clairement dans la description explicative qui va suivre faite en référence aux dessins annexés.

### Brève description des dessins

- la figure 1 est une vue, partiellement en coupe axiale, d'une machine électrique tournante simplifiée, équipée d'un dispositif d'assemblage par vissage de la poulie d'entraînement avec l'arbre du rotor de la machine selon le document FR A 2 898 654;
- la figure 2 est une vue en coupe d'une poulie d'entraînement du type de celle de la figure 1 équipée de sa courroie d'entraînement;
- la figure 3 est une vue analogue à la figure 2 avec une poulie modifiée selon l'invention;
- la figure 4 est une vue à plus grande échelle d'une gorge de la poulie à rainure interne selon l'invention ;
- la figure 5 est une vue de face de la poulie selon la flèche 5 de la figure 3.

### Description de l'invention

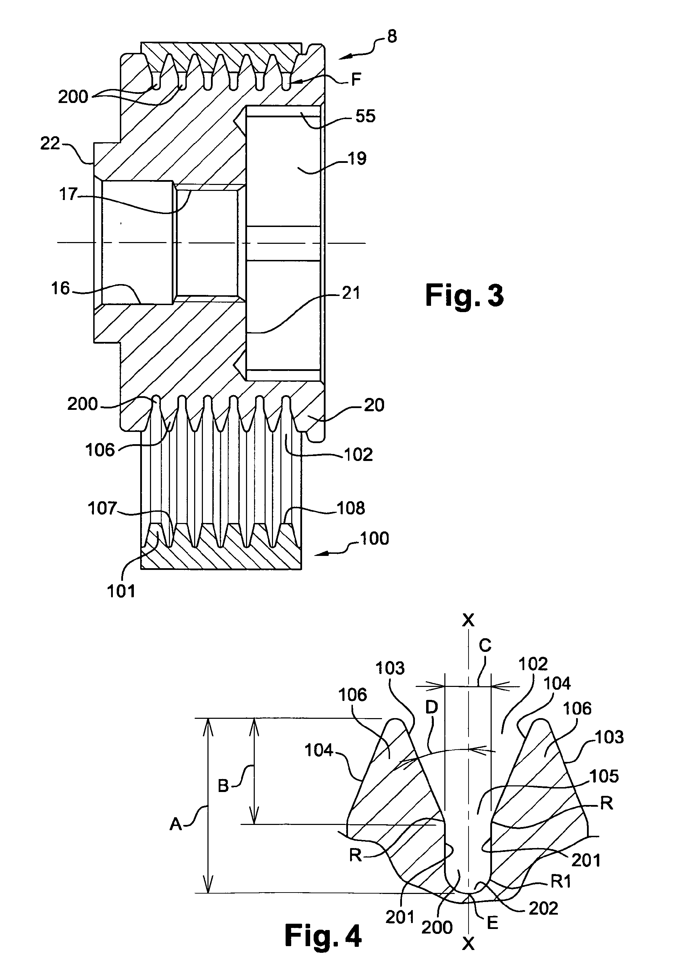

La poulie des figures 3 à 5 selon l'invention diffère de celle de la figure 2, uniquement par la configuration de sa périphérie externe 20, en sorte que les éléments communs seront affectés des mêmes signes de référence.

Cette poulie 8 présente à sa périphérie externe 20 une pluralité de gorges 102 à section en forme de V à fond arrondi pour réception des dents 101 de forme trapézoïdale d'une courroie poly-V 100.

Les gorges 102 sont donc des gorges évasées. La largeur de ces gorges 102 augmente en direction de la périphérie externe de la poulie 8.

La courroie 100 de la figure 3, identique à celle de la figure 2, comporte six dents 101 de forme trapézoïdale reçues chacune de manière complémentaire dans une gorge 102 de la poulie 8. Les six gorges 102 sont d'orientation circonférentielle et s'étendent sur 360°, tandis que les dents 101 de la courroie 100 s'étendent dans le sens de la longueur de la courroie 100.

Cette courroie 100, de manière connue, est à base d'élastomère, tel que du caoutchouc, renforcé par des fibres, telles que des fibres de nylon. La poulie 8 est par exemple métallique. Elle est usuellement en acier ou en aluminium. En variante la poulie est en matière plastique renforcée par des fibres. En variante la poulie est recouverte au niveau des flancs 103, 104 de ses gorges 102 d'une couche de matière frittée et poreuse, comme dans le document DE 21 15 843, pour diminuer encore plus les bruits dus à la présence d'air entre la poulie 8 et la courroie 100.

Les gorges 102 sont séparées les unes des autres par des pointes 106, à sommet arrondi, pénétrant chacune de manière complémentaire dans une creusure 107 à fond arrondi, que présente la courroie 100 ente deux de ses dents 101 consécutives. En variante le sommet de la pointe 106 est plat. Comme visible à la figure 3 il est ainsi prévu six pointes 106 entre deux épaulements d'extrémités (Non référencés) plus épais servant au calage axiale de la courroie 100.

Chaque gorge 102 intermédiaire est donc délimitée à sa périphérie externe par deux pointes consécutives 106 ici globalement de forme isocèle. Les pointes 106 sont délimitées chacune par deux flancs 103, 104 inclinés, qui sont destinés à coopérer chacun de manière intime et sous tension avec le flanc latéral associé d'une dent 101 de la courroie 100. Pour ce faire les bords de l'extrémité libre 108 d'une dent 101 sont arrondis. Les deux gorges 102 d'extrémités axiale sont délimitées également par deux flancs inclinés 103, 104 ; l'un des flancs se raccordant à sa périphérie externe à une pointe 106, tandis que l'autre flanc se raccorde à sa périphérie externe à l'épaulement d'extrémité concerné.

Chaque gorge 102 est évasée et est (figures 4) donc délimitée par deux flancs inclinés 103, 104 en vis-à-vis. Les épaulements présentent à leur périphérie externe une portée cylindrique de même diamètre que les sommets des pointes 106.

Les gorges de la poulie du vilebrequin ont un profil analogue aux gorges 102 de la poulie 8 de l'accessoire, qui consiste en un alterno-démarreur dans les figures 3 et 4. Dans ce mode de réalisation il est prévu six gorges 102 et six dents 101.

Dans certaines conditions de roulage ou d'arrêt du véhicule, par exemple au feu rouge, la courroie et la poulie sont mouillées, notamment suite à la traversée d'une mare d'eau ou d'un gué. De l'eau sous pression, ou d'une manière générale tout autre liquide, est accumulée entre les extrémités libres des dents et les fonds des gorges. Un film d'eau peut ainsi s'intercaler entre les flancs des gorges et des dents ce qui provoque une perte d'adhérence de la courroie et empêche notamment le véhicule de redémarrer ou l'accessoire, tel que le compresseur de l'installation de climatisation, de fonctionner. En outre il faut que la transmission soit la moins bruyante possible.

La présente invention apporte une solution à ces problèmes en configurant au moins certaines gorges d'au moins l'une des poulies d'entraînement de la transmission de mouvement à au moins une courroie du type poly-V.

Ainsi on configure uniquement au moins certaines gorges de la poulie 8 de l'accessoire et/ou de la poulie du vilebrequin ou d'un autre accessoire sans changer le mode de fixation de ces poulies respectivement sur l'arbre 1 et sur l'extrémité du vilebrequin.

Pour atteindre ce but l'une au moins une des poulies d'entraînement est dotée de rainures 200. Plus précisément certaines au moins des gorges 102 de cette poulie sont prolongées intérieurement par une rainure 200 de manière décrite ci-après.

Ces rainures limitent la pression au niveau des dents de la courroie et donc les bruits.

Pour une meilleure transmission toutes les gorges de la poulie d'entraînement sont prolongées intérieurement par une rainure 200.

Dans un mode de réalisation toutes les gorges de la poulie du vilebrequin sont prolongées intérieurement par une rainure.

Dans les figures 3 et 4, de manière économique, toutes les gorges de la poulie 8 sont prolongées intérieurement par une rainure 200.

En variante, pour l'obtention d'une solution optimale, toutes les gorges de la poulie 8 et de la poulie du vilebrequin ou d'un autre accessoire sont prolongées intérieurement par une rainure 200.

La rainure 200 comporte dans un mode de réalisation (figure 4) deux flancs parallèles 201, qui sont raccordés intérieurement l'un à l'autre par un fond semi cylindrique 202 de rayon R1. La rainure est donc délimitée par deux flancs 201 et un fond 202.

L'usinage de la gorge est ainsi réalisable de manière aisée par exemple à l'aide d'une fraise, ou de manière économique et rapide à l'aide d'un outil en forme de peigne, dont les dents sont configurées pour réaliser chacune une rainure 200. En variante les rainures 200 sont obtenues par tournage.

La périphérie externe de chaque flanc 201 se raccorde au flanc respectivement 103 et 104 de la gorge 102 par l'intermédiaire d'un rayonnage de rayon R.

Une gorge 102 à rainure 200 selon l'invention présente un axe de symétrie X-X.

L'angle D entre l'un des flancs 103, 104 et l'axe X-X est ici globalement égal à 20°.

Dans un exemple de réalisation non limitatif, la largeur de la rainure, c'est-à-dire la distance entre ces flancs 201 est globalement égale à 1,2 mm en sorte que le rayon R1 du fond 202 de la rainure 200 est globalement égal à 0,6 mm.

Cela n'affecte pas outre mesure la résistance mécanique de la poulie.

La distance A entre le sommet d'une pointe 106 ou la portée externe cylindriques de même diamètre des épaulements et le sommet E du fond 202 est globalement égal à 4,75 mm.

La distance B entre le sommet d'une pointe 106 ou la portée externe cylindriques de même diamètre des épaulements et la périphérie externe d'un flanc 201 de la rainure 200 est globalement égale à 2, 75 mm.

Le pas entre deux axe X-X de deux rainures 200 associées à deux gorges 102 consécutives est ici globalement égal à 3, 56 mm, tandis que le rayon R est globalement égal à 0,5 mm.

En logeant une pige de diamètre 2,5 mm dans une gorge 102 on obtient un diamètre extérieur globalement de 53,3 mm entre deux piges diamétralement opposées, le diamètre externe entre deux pointes 106 diamétralement opposées ou les portées externes des épaulement étant globalement égal à 52,3mm.

Ainsi qu'il ressort de ce qui précède et des dessins, selon une caractéristique de l'invention, deux lignes en vis-à-vis des flancs 103, 104 se coupent dans la rainure 200 au voisinage du sommet E du fond 202 de cette rainure 200.

Normalement les flancs 103, 104 d'une rainure sont raccordés par un fond arrondi s'étendant angulairement sur moins de 180 ° comme visible à la figure 2. Le rayon de l'arrondi est globalement de 0,6 mm.

Un jeu compris entre 0,5 mm et 1 mm existe entre l'extrémité libre 108 d'une dent 101 et le sommet du fond arrondi de la gorge 102 de la figure 2.

Le fond 202 de la rainure 200 se substitue au fond de la gorge 102.

Le fond de la gorge 102 est donc décalé vers l'intérieur par rapport aux flancs 103, 104 conservés.

L'angle de l'arrondi du fond de la gorge est augmenté puisque le fond 202 s'étend sur 180°.

Ce fond est raccordé à la base 105 des flancs 103, 104 par l'intermédiaire des flancs 201 avec présence d'un rayonnage R évitant les arêtes vives pour ne pas blesser la courroie.

La base 105 des flancs 103, 104 détermine la position de l'extrémité libre 108 de la dent 101 concernée.

Les flancs 103, 104 sont des flancs de contact avec les flancs de la dent 101 concernée de la courroie. L'extrémité libre 108 de cette dent 101 s'étend jusqu'au voisinage de la base 105 des flancs.

Dans une forme de réalisation un faible espace existe entre l'extrémité libre 108 et la base 105.

On conserve donc que la partie active d'une gorge 102.

La rainure selon l'invention augmente donc la distance B globalement dans cet exemple de 2 mm (différence entre les distances A et B).

Le jeu total entre l'extrémité libre 108 et le sommet E de la rainure 200 est globalement égale à 2 mm.

Bien entendu toutes les valeurs précitées dépendent des applications et notamment du diamètre de la poulie et de la taille des dents de la courroie.

Dans tout les cas, grâce à la caractéristique selon laquelle deux lignes en vis-à-vis des flancs 103, 104 d'une gorge 102 se coupent dans la rainure 200 au voisinage du sommet du fond 202 de cette rainure 200, on augmente le jeu et les capacités de stockage et d'évacuation d'un liquide, tel que de l'eau.

On réduit également les bruits en fonctionnement normal grâce à ce jeu.

Les rainures 200 sont des rainures de drainage et d'évacuation de l'eau qui permettent d'augmenter l'adhérence de la courroie lorsque celle-ci est mouillée. Les rainures 200 sont également des rainures de réduction des bruits.

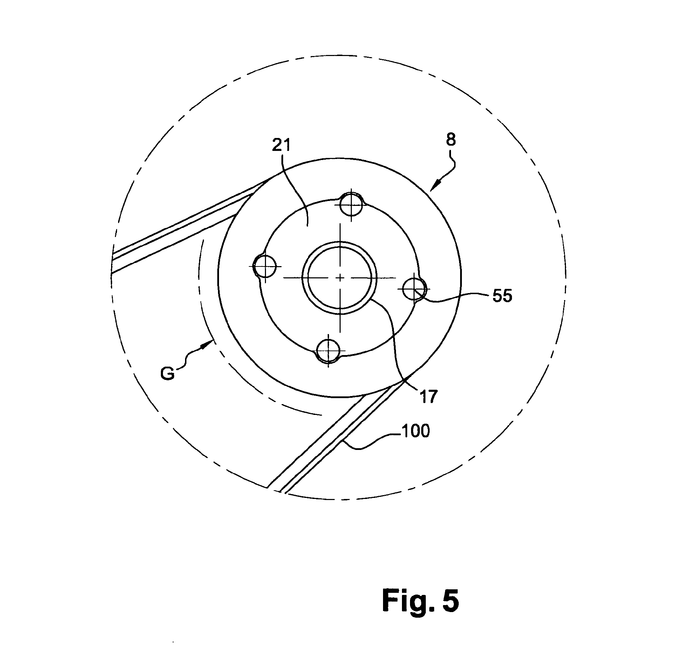

Plus précisément, en se reportant aux figures 3 et 5, il existe, d'une part, une zone F (figure 3) permettant la récupération du liquide, tel que de l'eau, transporté à la faveur des rainures 200 afin que ce liquide ne reste pas entre la courroie 100 et les flancs 103, 104 et d'autre part (figure 5) une zone d'évacuation G par la force centrifuge du liquide récupéré dans les gorges 220. Dans cette figure 5 on a représenté le contour de l'alterno-démarreur par un cercle en pointillé.

On notera que le fond 202 semi cylindrique favorise l'évacuation du liquide.

Grâce à l'invention on peut évacuer une grande quantité de liquide.

Il ressort de ce qui précède que les flancs 201 sont séparés l'un de l'autre par une distance inférieure ou égale à la largeur de l'extrémité libre 108 d'une dent 101 de la courroie.

Suivant une caractéristique, il ressort également de ce qui précède que la distance ente les flancs 201 est globalement égal au diamètre du fond arrondi de raccordement des flancs 103 et 104 de la gorge 102 de l'art antérieur. De manière précitée le fond arrondi de cette gorge 102 est décalé vers l'intérieur pour constituer le fond 202 de la rainure 200.

D'une manière générale la présence des rainures 200 ne modifie pas la zone utile des gorges, notamment la taille des flancs 103, 104 de contact avec les flancs des dents de la courroie. La zone utile de contact entre la courroie et la poulie n'est donc pas impactée par l'usinage des rainures.

Les zones de frottement des gorges 102 ne sont donc pas affectées par les rainures.

On appréciera également que la résistance mécanique de la périphérie externe 20 de la poulie 8 n'est pas affaiblie outre mesure. La caractéristique selon laquelle deux lignes en vis-à-vis des flancs 103, 104 d'une gorge 102 se coupent dans la rainure 200 au voisinage du sommet du fond 202 de cette rainure 200 permet d'augmenter la profondeur de la rainure tout en bénéficiant du volume nécessaire pour évacuer les liquides et l'air et ce en augmentant la quantité de matière présente ente deux rainures consécutives.

En variante le fond 202 de la rainure 200 est plat.

En variante, grâce aux rainures 200 selon l'invention, la courroie présente des dents à extrémité pointue comme les pointes 106. Les dents 101 sont dans tous les cas globalement de forme trapézoïdale.

En variante les flancs 201, 202 de la rainure ne sont pas parallèles. Ces flancs sont inclinés. Ils sont inclinés par exemple de manière convergente vers l'intérieur. Ils forment dans un mode de réalisation chacun un angle avec le flanc concernée de la gorge. Dans un autre mode de réalisation les rainures sont de section globalement trapézoïdale.

Bien entendu la présente invention n'est pas limitée aux exemples de réalisations décrits.

Ainsi en variante au moins une rainure 200 présente une taille différente des autres.

De manière précitée le nombre de dents 101 de la courroie 100 et de gorges 102 de la poulie 8 dépend des applications et du couple à transmettre.

Ce nombre peut être supérieur à six.

Plus les nombre de rainures et de gorges est important plus la poulie est efficace pour éviter une perte d'adhérence de la courroie.

Une même poulie est en variante configurée pour recevoir au moins deux courroies, dont une au moins est une courroie poly-V.

En augmentant la longueur axiale et le nombre de gorges et de rainures on peut monter au moins deux courroies sur la poulie.

Ainsi, en variante, la poulie du vilebrequin entraîne un premier accessoire par l'intermédiaire d'une première des deux courroies et un second accessoire via la deuxième courroie entraînée par la poulie du premier accessoire.

L'accessoire est en variante un simple alternateur ou un compresseur d'une installation de climatisation du véhicule automobile entraîné par la poulie du vilebrequin ou en variante par un moteur électrique à poulie, pilotée par exemple par l'intermédiaire d'un embrayage électromagnétique, lorsque le moteur thermique du véhicule est à l'arrêt par exemple à un feu rouge. L'alterno-démarreur ou l'alternateur peut également jouer le rôle du moteur électrique précité pour entraîner le compresseur, ou tout autre accessoire, lorsque le moteur thermique du véhicule est à l'arrêt.

Pour plus de précisions on se reportera par exemple au document EP 0 715 979, divulguant une solution dans laquelle une même courroie entraînée par le vilebrequin du moteur thermique entraîne deux accessoires à savoir dans ce cas l'alternateur réversible et le compresseur de l'installation de climatisation.

Le moteur du véhicule entraînant la poulie, dite poulie du vilebrequin, est soit thermique, soit électrique. Le véhicule est en variante un véhicule électrique.

Le type de rotor de l'accessoire dépend des applications. Ainsi en variante le rotor 2 de l'alternateur ou de l'alterno-démarreur de la figure 1 est remplacé par un rotor à pôles saillants et/ou à aimants permanents.

La solution selon l'invention s'applique de manière précitée à des démarreurs de moteur thermique à courroie comportant une poulie d'entraînement, tel que décrit par exemple dans le document EP A 1 293 665, ou à un ralentisseur électromagnétique du type de celui décrit dans le document DE 296 09 311.

L'invention est également applicable à un alterno-démarreur à train d'engrenages du type de celui décrit dans le document US A 5 418 400. Ainsi la poulie 8 à gorges selon l'invention se monte en lieu et place de la poulie de ce document.

Le mode de fixation de la poulie 8 sur l'arbre 1 peut être réalisé autrement par exemple à l'aide d'un écrou se vissant sur l'extrémité filetée de l'arbre 13 et prenant appui sur le fond 21 de la cavité.

Un clavetage peut intervenir entre la poulie et l'arbre. De même on peut prévoir un emmanchement du type tronconique.

## Revendications

1. Poulie d'entraînement d'un accessoire de véhicule automobile, notamment un alterno-démarreur, comprenant à sa périphérie externe (20) une pluralité de gorges (102) évasées et délimitées par des flancs inclinés (103, 104) pour réception de manière complémentaire des dents (101) globalement de forme trapézoïdale d'une courroie poly-V (100)), dans laquelle certaines au moins des ces gorges (102) sont prolongées intérieurement par une rainure (200) n'affectant pas les zones utiles de frottement de la gorge (102) avec les dents (101) de la courroie (100), **caractérisée en ce que** deux lignes en vis-à-vis des flancs (103, 104) d'une gorge (102) se coupent dans la rainure (200) au voisinage du sommet du fond (202) de cette rainure (200).

2. Poulie selon la revendication 1, **caractérisée en ce que** toutes les gorges (102) de la poulie sont prolongées intérieurement par une rainure (200).

3. Poulie selon la revendication 1 ou 2, **caractérisée en ce qu'**elle constitue la poulie du vilebrequin du moteur thermique du véhicule.

4. Poulie d'entraînement selon la revendication 1 ou 2, **caractérisée en ce qu'**elle constitue la poulie (8) de l'accessoire du véhicule automobile.

5. Poulie selon la revendication 4, **caractérisée en ce qu'**elle constitue la poulie (8) d'un alterno-démarreur ou d'un démarreur de véhicule automobile.

6. Poulie selon l'une quelconque des revendications précédentes, **caractérisée en ce que** la rainure (200) comporte deux flancs parallèles (201).

7. Poulie selon la revendication 6, **caractérisée en ce que** les flancs (201) de la rainure (200) sont séparés l'un de l'autre par une distance inférieure à la largeur de l'extrémité libre (108) d'une dent (101) de la courroie (100).

8. Poulie selon la revendication 6 ou 7, **caractérisée en ce que** le fond de la rainure (200) est plat.

9. Poulie selon la revendication 6 ou 7, **caractérisée en ce** les flancs (201) d'une rainure (200) sont raccordés l'un à l'autre intérieurement par un fond (202) semi cylindrique.

10. Poulie selon la revendication 9, **caractérisée en ce que** la distance entre les flancs (201) de la rainure (200) est globalement égale au diamètre du fond de raccordement d'une gorge (102), dont le fond est décalé vers l'intérieur pour constituer le fond de la rainure (200)

11. Poulie selon l'une quelconque des revendications 6 à 10, **caractérisée en ce que** la distance entre les deux flancs parallèles est globalement égale à 1,2mm

12. Poulie selon l'une quelconque des revendications 6 à 10 **caractérisée en ce que** la périphérie externe de chaque flanc (201) de la rainure (200) se raccorde au flanc concerné (103, 104) de la gorge (102) par l'intermédiaire d'un rayonnage (R).

13. Poulie selon l'une quelconque des revendications précédentes, **caractérisé en ce qu'**une gorge (102) à rainure (200) présente un axe de symétrie (X-X) et **en ce que** l'angle (D) entre l'un des flancs (103, 104) de la gorge (102) et l'axe de symétrie (X-X) est égal globalement à 20°.

## Claims

1. Drive pulley for driving a motor vehicle accessory notably an alternator-starter, comprising at its external periphery (20) a plurality of flared grooves (102) delimited by inclined side walls (103, 104) in order to house, in a complementing manner, roughly trapezoidal teeth (101) of poly-V belt (100), in which pulley at least some of these grooves (102) are extended on the inside by a channel (200) that does not affect the working friction zones via which the groove (102) rubs on the teeth (101) of the belt (100), **characterized in that** two mutually facing lines of the side walls (103, 104) of a groove (102) intersect in the channel (200) near the vertex of the bottom (202) of this channel (200).

2. Pulley according to Claim 1, **characterized in that** all of the grooves (102) of the pulley are internally extended by a channel (200).

3. Pulley according Claim 1 or 2, **characterized in that** it constitutes the crankshaft pulley of the combustion engine of the vehicle.

4. Drive pulley according to Claim 1 or 2, **characterized in that** it constitutes the pulley (8) of the accessory of the motor vehicle.

5. Pulley according to Claim 4, **characterized in that** it constitutes the pulley (8) of a motor vehicle alternator-starter or starter.

6. Pulley according to any one of the preceding claims, **characterized in that** the channel (200) has two parallel side walls (201).

7. Pulley according to Claim 6, **characterized in that** the side walls (201) of the channel (200) are separated from one another by a distance shorter than the width of the free end (108) of a tooth (101) of the belt (100).

8. Pulley according to Claim 6 or 7, **characterized in that** the bottom of the channel (200) is flat.

9. Pulley according to Claim 6 or 7, **characterized in that** the side walls (201) of a channel (200) are connected to one another internally by a semicylindrical bottom (202).

10. Pulley according to Claim 9, **characterized in that** the distance between the side walls (201) of the channel (200) is roughly equal to the diameter of the connecting bottom of a groove (102), the bottom of which is offset inwards to form the bottom of the channel (200).

11. Pulley according to any one of Claims 6 to 10, **characterized in that** the distance between the two parallel side walls is roughly equal to 1.2 mm.

12. Pulley according to any one of Claims 6 to 10, **characterized in that** the external periphery of each side wall (201) of the channel (200) connects to the corresponding side wall (103, 104) of the groove (102) via a blend radius (R).

13. Pulley according to any one of the preceding claims, **characterized in that** a groove (102) with a channel (200) has an axis of symmetry (X-X), and **in that** the angle D between one of the side walls (103, 104) of the groove (102) and the axis of symmetry (X-X) is roughly equal to 20°.

## Patentansprüche

1. Antriebsscheibe für ein Kraftfahrzeugzusatzgerät insbesondere einen Starter-Generator, die an ihrem äußeren Umfang (20) mehrere Kehlen (102) aufweist, die sich erweitern und durch schräge Flanken (103, 104) begrenzt sind, um komplementär im Allgemein trapezförmige Zähne (101) eines Mehrfach-V-Riemens (100) aufzunehmen, umfasst, wobei wenigstens Bestimmte dieser Kehlen (102) innen durch eine Rinne (200) verlängert sind, die die Reibungsnutzzonen der Kehle (102) mit den Zähnen (101) des Riemens (100) nicht beeinflussen, **dadurch gekennzeichnet, dass** sich zwei Linien gegenüber den Flanken (103, 104) einer Kehle (102) in der Rinne (200) in der Umgebung des Scheitelpunkts des Bodens (202) dieser Rinne(200) schneiden.

2. Scheibe nach Anspruch 1, **dadurch gekennzeichnet, dass** alle Kehlen (102) der Scheibe innen durch eine Rinne (200) verlängert sind.

3. Scheibe nach Anspruch 1 oder 2, **dadurch gekennzeichnet, dass** sie die Scheibe der Kurbelwelle der Brennkraftmaschine des Fahrzeugs bildet.

4. Antriebsscheibe nach Anspruch 1 oder 2, **dadurch gekennzeichnet, dass** sie die Scheibe (8) des Zusatzgeräts des Kraftfahrzeugs bildet.

5. Scheibe nach Anspruch 4, **dadurch gekennzeichnet, dass** sie die Scheibe (8) eines Starter-Generators oder eines Starters des Kraftfahrzeugs bildet.

6. Scheibe nach einem der vorhergehenden Ansprüche, **dadurch gekennzeichnet, dass** die Rinne (200) zwei parallele Flanken (201) aufweist.

7. Scheibe nach Anspruch 6, **dadurch gekennzeichnet, dass** die Flanken (201) der Rinne (200) voneinander durch eine Strecke getrennt sind, die kleiner ist als die Breite des freien Endes (108) eines Zahns (101) der Riemenscheibe (100).

8. Riemenscheibe nach Anspruch 6 oder 7, **dadurch gekennzeichnet, dass** der Boden der Rinne (200) eben ist.

9. Riemenscheibe nach Anspruch 6 oder 7, **dadurch gekennzeichnet, dass** die Flanken (201) einer Rinne (200) innen durch einen halbzylindrischen Boden (202) miteinander verbunden sind.

10. Riemenscheibe nach Anspruch 9, **dadurch gekennzeichnet, dass** der Abstand zwischen den Flanken (201) der Rinne (200) im Allgemeinen gleich dem Durchmesser des Verbindungsbodens einer Kehle (102) ist, deren Boden nach innen versetzt ist, um den Boden der Rinne (200) zu bilden.

11. Scheibe nach einem der Ansprüche 6 bis 10, **dadurch gekennzeichnet, dass** der Abstand zwischen den zwei parallelen Flanken im Allgemeinen gleich 1,2 mm ist.

12. Scheibe nach einem der Ansprüche 6 bis 10, **dadurch gekennzeichnet, dass** der äußere Umfang jeder Flanke (201) der Rinne (200) mit der betreffenden Flanke (103, 104) der Kehle (102) über eine Biegung (R) verbunden ist.

13. Scheibe nach einem der vorhergehenden Ansprüche, **dadurch gekennzeichnet, dass** eine Kehle (102) mit Rinne (200) eine Symmetrieachse (X-X) aufweist und dass der Winkel (D) zwischen einer der Flanken (103, 104) der Kehle (102) und der Symmetrieachse (X-X) im Allgemeinen gleich 20° ist.
